# EUROPEAN PATENT APPLICATION

(11) **EP 2 848 928 A1**
(43) Date of publication of application: **18.03.2015**
(21) Application number: 14184582.6
(22) Date of filing: 12.09.2014
(51) Int. Cl.: G01N 27/327

(54) **Biosensor test strip for biosensor test device**

(30) Priority: 12.09.2013 US 201361877217 P
(71) Applicant: Joinsoon Medical Technology Co., Ltd., New Taipei City 221 (TW)
(72) Inventor: Lee, JEN-FANG, New Taipei (TW); Huang, KUAN-CHIH, New Taipei (TW)
(74) Representative: Towlson, Samantha Jayne

(57) **Abstract**

A biosensor test device of this disclosure includes a biosensor test strip and biosensor monitor connecting with the biosensor test strip. The biosensor test strip includes a base layer and at least one test section. The test section includes a first electrode, a second electrode, a first track, a second track, a first contact pad, a second contact pad and a reaction zone formed on a base layer. The first track is electrically connected to both the first electrode and the first contact pad. The second track is electrically connected to both the second electrode and the second contact pad. The reaction zone is coated with reagents which contact at least one of the first electrode or the second electrode.

## Description

### Field

The present disclosure relates to a biosensor test strip and the detection or measurement of analytes in body fluid samples.

### BackGround

For patients suffering from high blood glucose, a biosensor monitor, such as a blood glucose meter, is necessary for routine daily self-checks. When using a conventional biosensor monitor, a user normally inserts a single-use biosensor test strip into the biosensor monitor and introduces a body fluid sample, such as blood, to the test strip. The reaction zone of a test strip is normally coated with reagent (i.e., glucose oxidase or GOD), which covers parts of a working electrode and a reference electrode. The body fluid samples interact with the reagent and provide the biosensor an electric signal. After the signal is interpreted as a result of the electrochemical reaction of reagents with analytes in the body fluid sample, the single-use test strip is discarded.

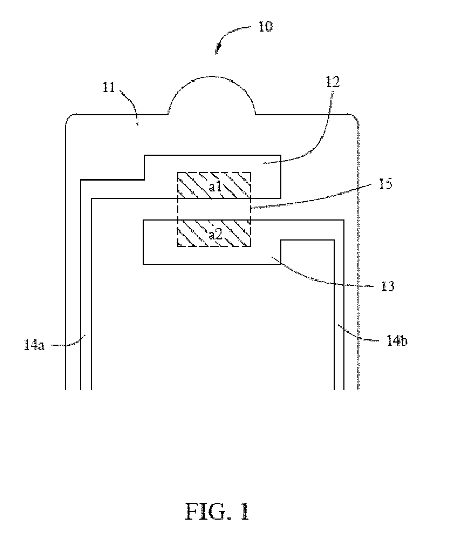

For example, as shown in FIG. 1, the test strip 10 comprises a base layer 11, a working electrode 12, a reference electrode 13, a reaction zone 15, tracks (14a, 14b) and contact pads (not shown in FIG. 1). Typically, reagents are deposited or coated on a reaction zone 15, and this reaction zone covers parts of the working electrode 12 and the reference electrode 13. The reagent reacts with a biological sample so that an analyte of interest in the biological sample can be detected and measured when an electrical potential is applied between the electrodes 12 and 13. The measured electrical property of the reacted sample may therefore indicate a biochemical property, such as the blood glucose level, of the sample.

Theoretically, the same biological samples should result in the same readings if the samples are tested by test strips made in the same batch. However, due to various manufacturing conditions, each of the fabricated biosensor test strips may be different in some aspects. For example, some electrochemical characteristics of the enzyme reagents are highly susceptible to manufacturing and environmental variables. These variables may negatively affect, for example, the number and size of the air bubbles present in the enzyme reagent and hence the homogeneous distribution of the enzyme and mediator, such as potassium ferricyanide. Another inevitable manufacturing variable is the shifting of the position of a coating area during manufacturing process. That is, though the position of the coating area of a reagent is predetermined, it is difficult to fabricate two biosensor test strips with exactly the same reaction zone at the same position and covering the same area of the electrodes. This could lead to substantial measurement error because the ratio of overlapping area a1 (the overlapping area between the reaction zone 15 and the working electrode 12) to a2 (the overlapping area between the reaction zone 15 and the reference electrode 13) is different. These variables thus constitute inherent differences in the test strips. Another aspect of the conventional test strip is that each test strip is capable of performing only one test. In addition, the electrodes are all formed on a single layer which would limit the possibility of different designs of the electrodes and the contact pads. Still another aspect of the conventional test strip is that the electrical potential reduces when the reaction between a biological sample and reagents occurs. This may lead to a longer testing period and inaccurate results.

What is needed, therefore, is a solution to overcome the above described disadvantages.

### Summary

A biosensor test device of this disclosure includes a biosensor test strip and biosensor monitor connecting with the biosensor test strip. The biosensor test strip includes a base layer and at least one test section. The test section includes a first electrode, a second electrode, a first track, a second track, a first contact pad, a second contact pad and a reaction zone formed on a base layer. The first track is electrically connected to both the first electrode and the first contact pad. The second track is electrically connected to both the second electrode and the second contact pad. The reaction zone is coated with reagents which contact at least one of the first electrode or the second electrode.

### BRIEF DESCRIPTION OF THE DRAWINGS

Many aspects of the present embodiments can be better understood with reference to the following drawings. The components in the drawings are not necessarily drawn to scale, the emphasis instead being placed upon clearly illustrating the principles of the present embodiments. Moreover, in the drawings, like reference numerals designate corresponding parts throughout the several views.
FIG. 1 is a schematic plan view of a typical biosensor test strip for use in measuring a concentration of an analyte of interest in a biological sample in related arts.
FIG. 2 is a schematic plan view of an embodiment of a biosensor test strip according to the present disclosure.
FIG. 3 is a schematic plan view of another embodiment of a biosensor test strip according to the present disclosure.
FIG. 4 is a schematic plan view of another embodiment of a biosensor test strip according to the present disclosure.
FIG. 5A is a schematic plan view of another embodiment of a biosensor test strip according to the present disclosure.
FIG. 5B is a schematic plan view of another embodiment of a biosensor test strip according to the present disclosure.
FIG. 5C is a schematic plan view of another embodiment of a biosensor test strip according to the present disclosure.
FIG. 5D is a schematic plan view of another embodiment of a biosensor test strip according to the present disclosure.
FIG. 5E is a schematic plan view of another embodiment of a biosensor test strip according to the present disclosure.
FIG. 5F is a schematic plan view of another embodiment of a biosensor test strip according to the present disclosure.
FIG. 5G is a schematic plan view of another embodiment of a biosensor test strip according to the present disclosure.
FIG. 5H is a schematic plan view of another embodiment of a biosensor test strip according to the present disclosure.
FIG. 5I is a schematic plan view of another embodiment of a biosensor test strip according to the present disclosure.
FIG. 5J is a schematic plan view of another embodiment of a biosensor test strip according to the present disclosure.
FIG. 5K is a schematic plan view of another embodiment of a biosensor test strip according to the present disclosure.
FIG. 5L is a schematic plan view of another embodiment of a biosensor test strip according to the present disclosure.
FIG. 6 is a schematic plan view of another embodiment of a biosensor test strip with multiple tests according to the present disclosure.
FIG. 7 is a schematic plan view of another embodiment of a biosensor test strip with multiple tests according to the present disclosure.
FIG. 8 is a schematic plan view of another embodiment of a biosensor test strip with multiple tests according to the present disclosure.
FIG. 9 is a schematic plan view of another embodiment of a biosensor test strip with multiple tests according to the present disclosure.
FIG. 10 is a schematic plan view of another embodiment of a biosensor test strip with multiple tests according to the present disclosure.
FIG. 11A is a schematic plan view of the structure of another embodiment of a biosensor test strip with multiple tests which has only one base layer according to the present disclosure.
FIG. 11B is a schematic plan view of the structure of another embodiment of a biosensor test strip with multiple tests which has two base layers according to the present disclosure.
FIGS. 12A and 12B are schematic plan views of the structure of another embodiment of a biosensor test strip with multiple tests which has two base layers according to the present disclosure.
FIGS. 13A and 13B are schematic plan views of the structure of another embodiment of a biosensor test strip with multiple tests which has two base layers according to the present disclosure.
FIGS. 14A and 14B are schematic plan views of the structure of another embodiment biosensor test strip with multiple tests which has two base layers according to the present disclosure.
FIGS. 15A and 15B are schematic plan views of the structure of another embodiment of a biosensor test strip with multiple tests which has two base layers according to the present disclosure.
FIGS. 16A and 16B are schematic plan views of the structure of another embodiment of a biosensor test strip with multiple tests which has two base layers according to the present disclosure.
FIGS. 17A and 17B are schematic plan views of the structure of another embodiment of a biosensor test strip with multiple tests which has two base layers according to the present disclosure.
FIGS. 18A and 18B are schematic plan views of the structure of the connection between the biosensor monitor connector terminal and the contact pads of the biosensor test strip according to the present disclosure.
FIGS. 19A, 19B, and 19C illustrate the different ways of inserting a biosensor test strip in to a biosensor monitor according to the present disclosure.

### DETAILED DESCRIPTION

In order to enhance an understanding of the principles of the disclosure, several embodiments of a biosensor test strip and their use in a biosensor monitor will now be described in detail below and with reference to the drawings. It is to be noted that no limitation of the scope of the disclosure is intended. Alterations and modifications in the illustrated device, and further applications of the principles of the disclosure as illustrated therein, as would normally occur to a person having ordinary skill in the art to which the disclosure relates, are contemplated, and desired to be protected.

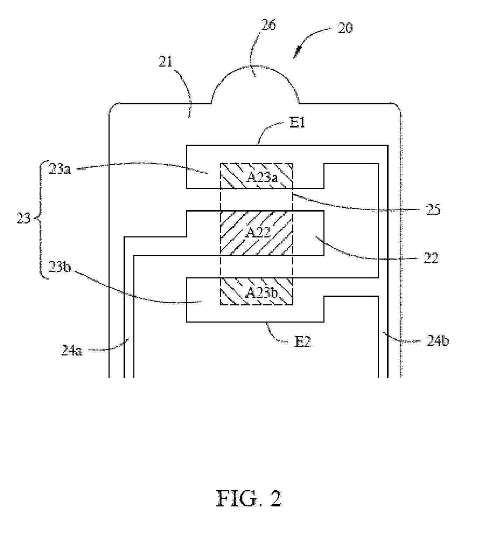

Referring to FIGS. 2-5, a biosensor test strip 20 in accordance with embodiments is provided. The biosensor test strip 20 comprises, at least, a first electrode 22, a second electrode 23, a first track 24a, a second track 24b, a first contact pad, a second contact pad (contact pads are not shown) and a reaction zone 25 formed on a base layer 21. The first track 24a is electrically connected to both the first electrode 22 and the first contact pad. The second track 24b is electrically connected to both the second electrode 23 and the second contact pad. The reaction zone 25 may be fully or partially coated with reagents to directly contact parts of the first electrode 22 and the second electrode 23.

Referring to FIG. 2, in this embodiment, the second electrode 23 comprises two electrode pads 23a and 23b, and the first electrode 22 is formed and located between the two electrode pads 23a and 23b, i.e., the second electrode 23 partially surrounds the first electrode 22. A defined quantity of a reagent is partially or fully coated on the reaction zone 25 and covers parts of the first electrode 22 and the second electrode 23. The overlapping area or contacting area between the reaction zone 25 and the first electrode 22 is designated as A22 while the overlapping areas between the reaction zone 25 and the electrode pads 23a and 23b are A23a and A23b respectively. E1 is the edge of an electrode that is located closest to a sample introducing port 26 while E2 is the edge of another electrode that is the farthest to the sample introducing port 26. The electrodes closest and farthest to the sample introducing port are subject to change. To illustrate, as indicated in FIG. 2, E1 is the edge of electrode pad 23a that is closest to the sample introducing port 26 and E2 is the edge of the electrode pad 23b that is farthest to the sample introducing port 26. As long as the reaction zone 25 is located within the edges E1 and E2, the area ratio of A23a plus A23b to A22 will always be the same and thus allow a certain range of position shift of the reaction zone and ultimately reduce errors when measuring the analyte of interest in a biological sample. To further illustrate, if the reaction zone 25 is shifted and coated on a position closer to the sample introducing port 26 during manufacturing process, the area of A23a will enlarge and A23b will shrink. However the sum of the area of A23a and A23b will still be the same and thus the area ratio of A23a plus A23b to A22 will stay the same, which would lead to a more consistent measurement of a biological sample.

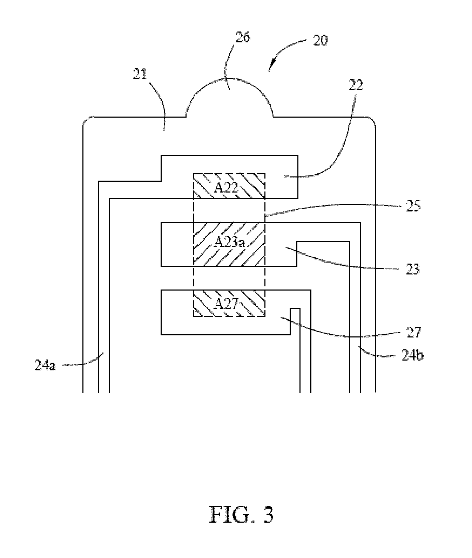

Another aspect of the present disclosure concerns FIG. 3. In one embodiment, the second electrode 23 comprises only one electrode pad 23a. A third electrode 27, which is electrically independent to the first electrode 22 and the second electrode 23, is employed to contact the reaction zone 25. An overlapping area or contacting area between the reaction zone 25 and the third electrode 27 is designated as A27. The biosensor monitor would provide an electrical potential between the first electrode 22 and the second electrode 23 to measure the response. Once the biological sample reacts with the reagents on the reaction zone 25, the first electrode 22 and the second electrode 23 will be electrically connected and the biosensor monitor will sense a drop in the measured electrical property value (i.e., voltage, current or resistance) through the first electrode 22 and the second electrode 23. The drop in the electrical property will increase with the completion of the reaction. However, the drop in the electrical property would slow down the testing process, affect the final reading of the biological sample, and thus would provide an inaccurate value to the user. By employing the third electrode 27 which provides a predetermined potential to the reaction zone 25, the third electrode 27 would stabilize the measurement, speed up the process of reading, and increase the accuracy of the reading.

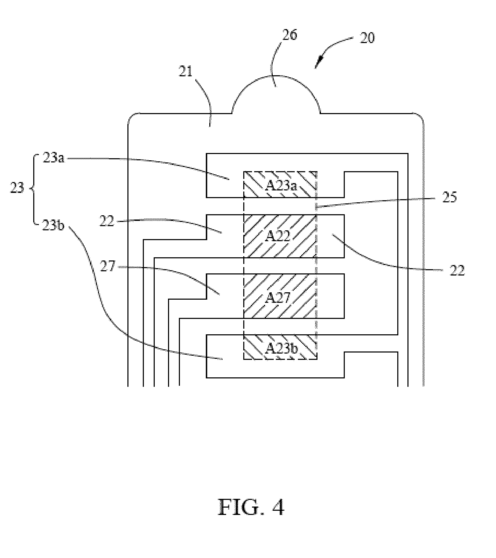

Referring also to FIG. 4, which is another embodiment of the present disclosure, the second electrode 23 comprises two electrode pads 23a and 23b, and both the first electrode 22 and the third electrode 27 are formed in an area between the electrode pads 23a and 23b. In this embodiment, the electrodes described in FIGS. 2 and 3 are employed. The electrode pads 23a and 23b of the second electrode 23 are used to keep the ratio of A23a plus A23b to A22 fixed. The third electrode 27 is employed to provide a stable measuring potential to the biosensor test strip and the biological sample. Therefore, by using both the fixed ratio provided by the second electrode 23 and the stabilization of measurement provided by the third electrode 27, the biosensor test strip and the biosensor monitor together would provide a faster, more stable and more accurate reading to a user.

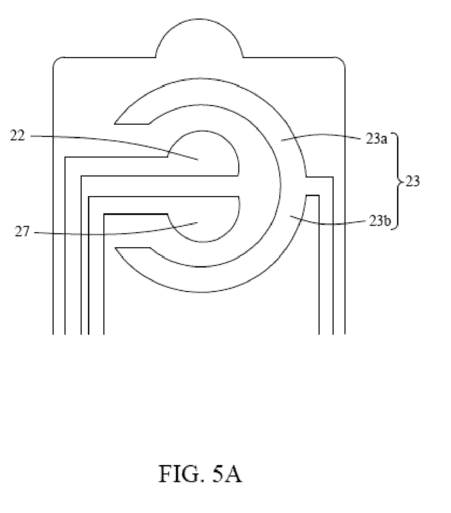

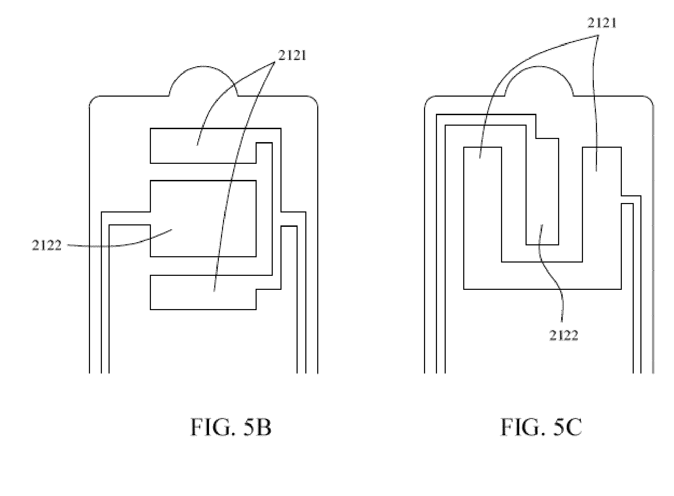

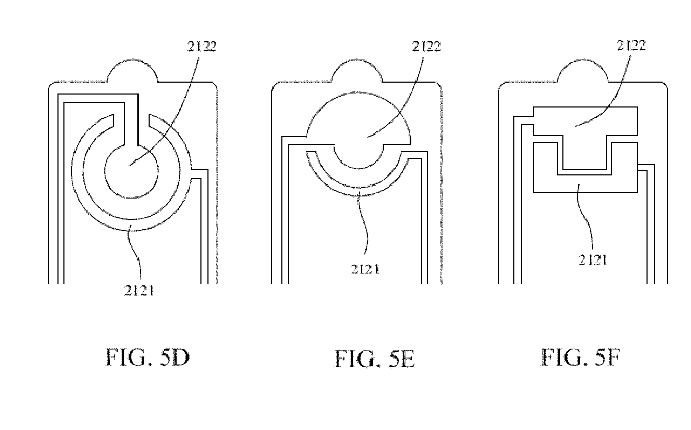

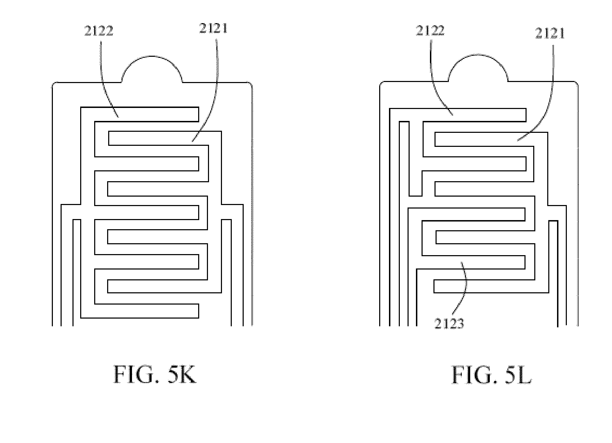

FIG. 5A is another embodiment of the present disclosure. As illustrated, the electrode pad 23a and 23b are formed in an open circular shape where the opening allows the first electrode 22 and the third electrode 27 to be deployed between the electrodes 23a and 23b. The first and the third electrodes 22, 27 are also formed in a semicircle shape to correspond to the second electrode 23. The first and second electrodes may be deployed as described in FIGS. 5B-5L. Specifically, FIGS. 5B, 5C, 5F, and 5K illustrated that the first electrode 2121 is composed of two electrode pads (not annotated) and the second electrode 2122 is positioned between the two electrode pads of the first electrode 2121. In FIG. 5K, the first electrodes 2121 and the second electrode 2122 each may have more than one electrode pads (not annotated) and form a comb-like electrode structure. One or more electrode pads of the first electrode 2121 may be positioned between two electrode pads of the second electrodes 2122. Similarly, one or more electrode pads of the second electrode 2122 may be positioned between two electrode pads of the first electrode 2121. The outermost electrode pads of the first electrode 2121 and/or the second electrode 2122 may not be positioned between any electrode pads since it is the outermost electrode pad. In FIGS. 5D and 5E, the first electrode 2121 and the second electrode 2122 may be made in a substantially circular shape. Specifically, the first electrode 2121 may substantially surround the second electrode 2122 while the arrangement leaves the two electrodes 2121 and 2122 electrically independent. As illustrated in FIG. 5E, the first electrode 2121 has a semi-circular shape and part of the second electrode 2122 is positioned between the electrode pads of first electrode 2121 or is partly surrounded by the first electrode 2121.

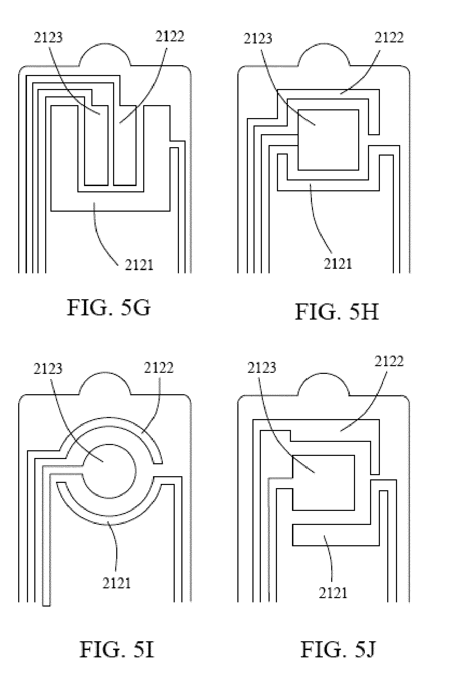

In FIGS. 5G - 5J and 5L, a third electrode 2123 is adopted. As illustrated in FIG. 5G, the second electrode 2122 and the third electrode 2123 is positioned between the electrode pads of the first electrode 2121 while the arrangement leaves the first, second and third electrodes (2121, 2122, 2123) electrically independent. In FIGS. 5H and 5J, the first electrode 2121, the second electrode 2122 and the third electrode 2123 are in a substantially square or rectangular shape. The first electrode 2121 and the second electrode 2122 may each substantially surround half of the third electrode pad 2123 while leaving the third electrode 2123 electrically independent. As illustrated in 5H and 5J, the third electrode 2123 is an enlarged rectangular electrode pad and is substantially surrounded by the first electrode 2121 and the second electrode 2122 while the arrangement leaves the three electrodes electrically independent. In FIG. 5I, the first electrode 2121, the second electrode 2122, and the third electrode 2123 are a substantially circular shape. As illustrated in FIG. 5I, the third electrode 2123 is an enlarged circular electrode pad and is substantially surrounded by the first electrode 2121 and the third electrode 2122 while the arrangement leaves the three electrodes electrically independent. Also, as described in FIG. 5L, a third electrode 2123 is employed to have several electrode pads which form a comb-like electrode structure. One or more electrode pads of the third electrode 2123 may be positioned between the electrode pads of the first electrode 2121, or between the electrode pads of the second electrodes 2122, or between the electrode pad of the first electrode 2121 and the electrode pad of the second electrode 2122.

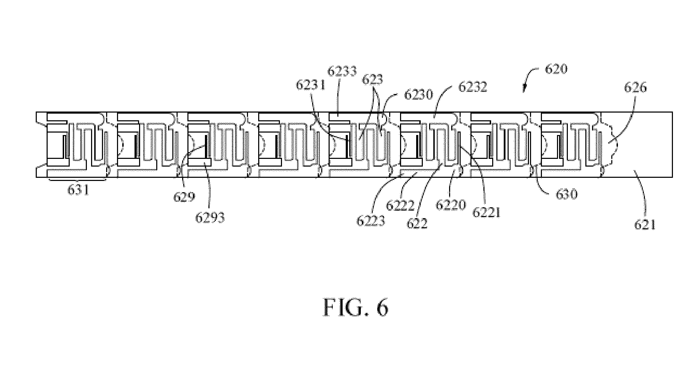

It is to be noted that the present disclosure may include other sort of electrodes. Referring to FIG. 6, a sub-first electrode 6221 that is electrically coupled to a first electrode 622 is located at a position closest to a sample introducing port 626. Likewise, a sub-second electrode 6231 that is electrically coupled to a second electrode 623 is located at a position farthest to the sample introducing port 626. Once the biological sample is introduced to the sample introducing port and passes to the sub-first 6221 and sub-second electrodes 6231, the biosensor monitor will sense signals through the sub-first 6221 and sub-second 6231 electrodes and multiple parameters such as the time period of the signal started and ended, the current, the voltage, the resistance and so on are measured and recorded. Such information is useful to identify specific information such as sample fluid velocity and useful to provide users with supplement information to interpret the results of the test. Still in another embodiment, a fill-detect electrode 629 that provides information of whether the sample is sufficient may be employed as well. The fill-detect electrode 629 is set at any position where it can be determined if there is enough biological sample to perform a complete test. In this embodiment, the fill-detect electrode 629 is formed at the position farthest to the sample introducing port. A first check node 6220 is electrically connected to the first electrode 622 and the second check node 6230 is electrically connected to the second electrode 623. By measuring the impedance or the resistance of the reagent between the first check node 6220 and the second check node 6230, the biosensor test strip 620 with incorrect reagent impedance or resistance is considered to be defective. One skilled in the art would appreciate that the above mentioned tracks, electrodes, nodes and contact pads may be deployed in any other way which may provide the same result as described above. A single biosensor test strip 620 includes at least eight sets of sample test sections 631. Pre-cuts 630 are formed on the base layer 621 and, by pressuring the pre-cuts 630, each section 631 can be obtained and can perform one test. On each section lies at least the first electrode 622, the sub-first electrode 6221, the second electrode 623, the sub-second electrode 6231, the fill-detect electrode 629, a first track 6222, a second track 6232, a first contact pad 6223, a second contact pad 6233, the first check node 6220, the second check node 6230, and the fill-detect contact pad 6293. The first track 6222 is formed thereon the base layer 621 and direct an electrical signal to the first contact pad 6223. The second track 6232 is formed thereon the base layer 621 and direct an electrical signal to the second contact pad 6233. While the first electrode 622, the first check node 6220, the sub-first electrode 6221, the first track 6222, and the first contact pad 6223 are in electrical connection and form a first circuit, the second electrode 623, the second check node 6230, the sub-second electrode 6231, the second track 6232, and the second contact pad 6233 are in electrical connection and form a second circuit. The fill-detect 629 and the fill-detect contact pad 6293 are in electrical connection. The first circuit, the second circuit and the fill-detect circuit are electrically independent on each section while not in use. Parts of the first contact pad 6223 and the second contact pad 6233 are substantially parallel to the longitudinal side of the base layer 621, while the first electrode 622, the sub-first electrode 6221, the second electrode 623, the sub-second electrode 6231 and the fill-detect electrode 629 are substantially perpendicular to the longitudinal side of the base layer 621. The sub-first, the sub-second, the fill-detect electrodes, and the first and second nodes can be optional and may be employed or left out if desired. In practical uses, the biosensor test strip 620 is first inserted into the test strip inserting port (not shown) of the biosensor monitor. The sample test section 631 is broken off by pressuring the pre-cut 630, leaving the sample test section 631 protruding out of the test strip inserting port of the biosensor monitor and being ready for the application of a biological sample.

In another embodiment not shown in figures, the fill-detect electrode is formed at the position between sub-second electrode and the second electrode. As will be appreciated by the person skilled in the art, the fill-detect electrode can be integrated into the sub-first or sub-second electrode such that no fill-detect electrode is needed to provide a fill-detect function.

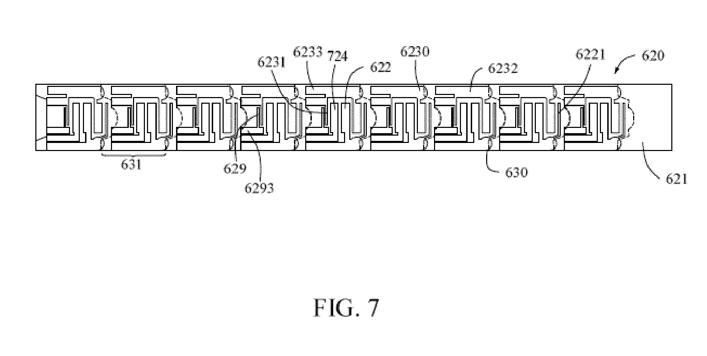

Referring to FIG. 7, the tracks, the electrodes, and the contact pads are deployed in a similar pattern as described in FIG. 3. Specifically, in this embodiment, a third electrode 724 is employed. Pre-cuts 630 are formed on the base layer 621 and, by pressuring the pre-cuts 630, each section 631 can be obtained and can perform one test. The third electrode 724 is disposed between the first electrode 622 and the sub-second electrode. Parts of the first contact pad 6223 and the second contact pad 6233 are substantially parallel to the longitudinal side of the base layer 621, while parts of the first electrode 622, the sub-first electrode 6221, the second electrode 623, the sub-second electrode 6231, the third electrode 627, and the fill-detect electrode 629 are substantially perpendicular to the longitudinal side of the base layer 621. The sub-first, the sub-second, the fill-detect electrodes, and the first and second nodes can be optional and may be employed or left out if desired.

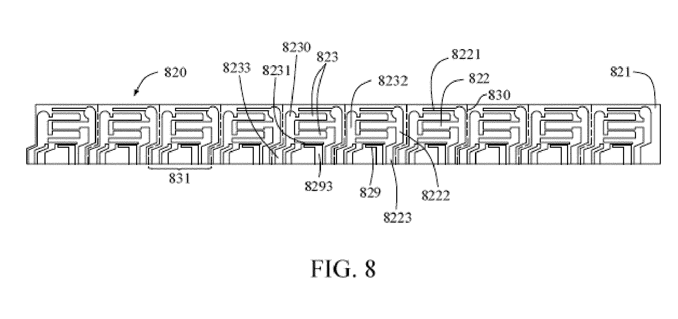

Referring now to FIG. 8, the tracks, the electrodes, and the contact pads are deployed in a similar pattern as described in FIG. 2. Pre-cuts 830 are formed on the base layer 821 and, by pressuring the pre-cuts 830, each section 831 can be obtained and can perform one test. On each section 831 lies at least the first electrode 822, the sub-first electrode 8221, the second electrode 823, the sub-second electrode 8231, the fill-detect electrode 829, a first track 8222, a second track 8232, a first contact pad 8223, a second contact pad 8233, the first check node 8220, the second check node 8230, and the fill-detect contact pad 8293. Parts of the first contact pad 8223 and the second contact pad 8233 are substantially perpendicular to the longitudinal side of a biosensor test strip 820, while parts of the first electrode 822, the sub-first electrode 8221, the second electrode 823, the sub-second electrode 8231, and the fill-detect electrode 829 are substantially parallel to the longitudinal side of the biosensor test strip 820. The sub-first, the sub-second, the fill-detect electrodes, and the first and second nodes are an option and may be employed or left out if desired.

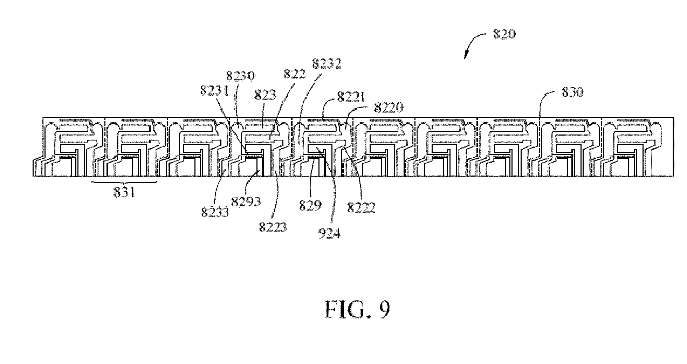

Referring to FIG. 9, the tracks, the electrodes, and the contact pads are deployed in a similar pattern as described in FIG. 3. Pre-cuts 830 are formed on the base layer 821 and, by pressuring the pre-cuts 830, each section 831 can be obtained and can perform one test. On each section 831 lies at least the first electrode 822, the sub-first electrode 8221, the second electrode 823, the sub-second electrode 8231, the fill-detect electrode 829, a first track 8222, a second track 8232, a first contact pad 8223, a second contact pad 8233, the first check node 8220, the second check node 8230, and the fill-detect contact pad 8293. A third electrode 924 is further employed in this embodiment. The third electrode 924 is disposed between the first electrode 822 and the fill-detect electrode 829. Parts of the first contact pad 8223 and the second contact pad 8233 are substantially perpendicular to the longitudinal side of a biosensor test strip 820, while parts of the first electrode 822, the sub-first electrode 8221, the second electrode 823, the sub-second electrode 8231, the third electrode 924, and the fill-detect electrode 829 are substantially parallel to the longitudinal side of the biosensor test strip 820. The sub-first, the sub-second, the fill-detect electrodes and the first and second nodes are optional and may be employed or left out if desired.

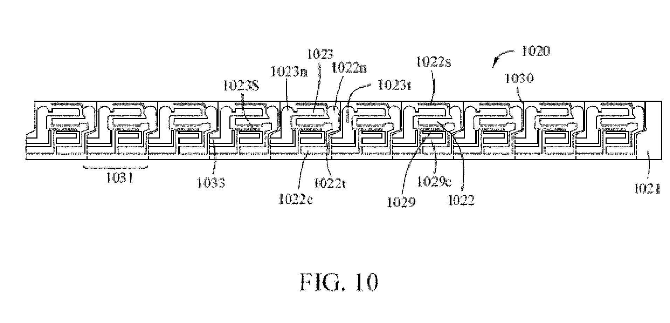

Referring to FIG. 10, the tracks and the electrodes are deployed in a similar pattern as described in FIG. 1. Pre-cuts 1030 are formed on the base layer 1021 and, by pressuring the pre-cuts 1030, each section 1031 can be obtained and can perform one test. On each section 1031 lies at least the first electrode 1022, the sub-first electrode 1022a, the second electrode 1023, the sub-second electrode 1023s, the fill-detect electrode 1029, a first track 1022t, a second track 1023t, a first contact pad 1022c, a second contact pad 1023c, the first check node 1022n, the second check node 1023n, and the fill-detect contact pad 1029c. The first contact pad 1022c, the second contact pad 1023c, the first electrode 1022, the sub-first electrode 1022s, the second electrode 1023, the sub-second electrode 1023s, and the fill-detect electrode 1029 are all substantially parallel to the longitudinal side of the biosensor test strip 1020. The sub-first, the sub-second, the fill-detect electrodes and the first and second nodes are optional and may be employed or left out if desired.

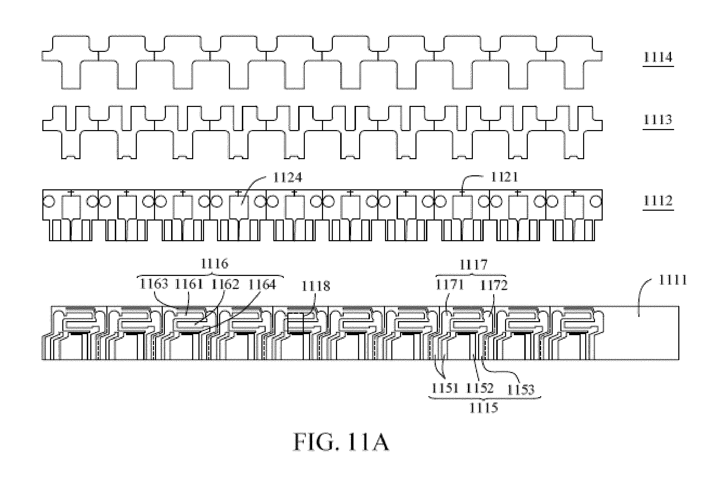

Another embodiment of the present disclosure is shown in FIG. 11A. A biosensor test strip with multiple tests comprises a base layer 1111 and an electrical circuit deployed as described in FIGS. 6-10 on the base layer 1111. In this embodiment, the biosensor test strip comprises an electric circuit, an insulating layer 1112, an adhesive layer 1113, and a cover layer 1114. The insulating layer 1112 is formed on the base layer 1111 and exposes part of contact pads 1115, electrodes 1116, reaction zones 1118 and check nodes 1117.

The contact pads 1115 include a first contact pad 1153, a second contact pad 1151 and a fill-detect contact pad 1152. The electrodes 1116 include a first electrode 1162, a sub-first electrode 1163, a second electrode 1161 and a sub-second electrode 1164. The check nodes 1117 include a first check node 1172 and a second check node 1171. The insulating layer 1112 further comprises a slot 1121, a reaction zone opening 1124 and a venting slot 1123. The insulating layer 1112 is in fluidic communication with external air and the reaction zone opening 1124. The reaction zone opening 1124 is also in fluidic communication with the venting slot 1123. The adhesive layer 1113 is formed on the insulating layer 1112 and exposes part of contact pads 1115, electrodes 1116, reaction zones 1118 and check nodes 1117. The cover layer 1114 is formed on the adhesive layer 1113 and exposes part of the contact pads 1115. Upon assembling of the biosensor test strip, a channel is defined by all layers presented in FIG. 11A and thus provides a path for a biological sample to enter to the reaction zone 1118 to react with a reagent and for the air to leave through the venting slot 1123. Embodiments described here shall not limit the scope of the disclosure. In an alternative embodiment, the venting slot 1123 can be deployed in a different way to have more than one venting slots and thus have more than two holes to vent the air.

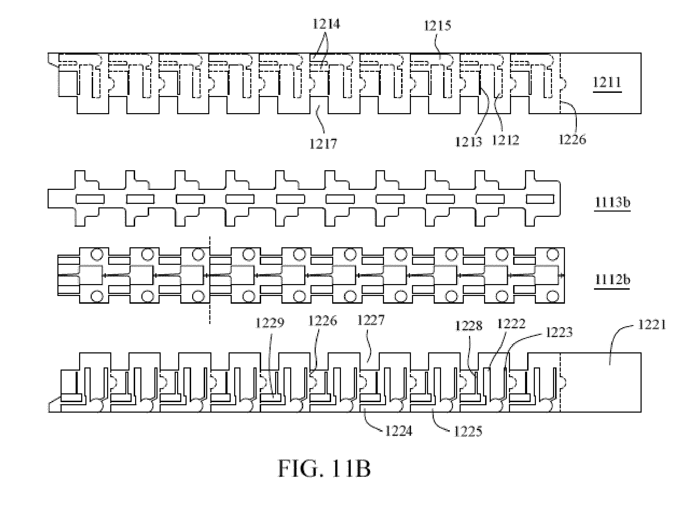

Another embodiment of the present disclosure is shown in FIG. 11B. A biosensor test strip with multiple tests comprises a first layer 1221 and a second layer 1212, and two sets of electric circuits, each deployed on one base layer. The biosensor test strip further comprises an insulating layer 1112b and an adhesive layer 1113b. As shown in FIG. 11B, the biosensor test strip for multiple tests comprises a first base layer 1221 where a first electrode 1222, a first track 1225, a sub-first electrode 1223 and a first contact pad 1224 are formed thereon. Pre-cuts 1226 are so formed on both the first base layer 1221 and the second base layer 1211 that when the pre-cuts 1226 are broken it produces a blunt and same edge on both the first base layer 1221 and the second base layer 1211. A first opening area 1227 is formed on the first base layer 1221 and defined by the first base layer 1221. The biosensor test strip for multiple tests further comprises a second base layer 1211 where a second electrode 1212, a second track 1215, a sub-second electrode 1213, and a second contact pad 1214 are formed thereon. A fill-detect electrode 1228 and fill-detect contact pad 1229 are also formed on the first base layer 1221. A second opening area 1217 is formed on the second layer 1211 and defined by the second base layer 1211. The first opening area 1227 exposes the second contact pad 1214 for electrically connecting to the biosensor monitor and the second opening area 1217 exposes the first contact pad 1224 as well. An insulating layer 1112b and an adhesive layer 1113b are formed between the first base layer 1221 and the second base layer 1211. The adhesive layer 1113b directly contacts the first base layer 1221 or directly contacts the second base layer 1211. That is, the position of the adhesive layer 1113b and the insulating layer 1112b between the two base layers 1211 and 1221 are exchangeable. A first electrical circuit comprises the first contact pad 1224, the first electrode 1222, the sub-first electrode 1223, and the first track 1225. A second electrical circuit described here comprises the second contact pad 1214, the second electrode 1212, the sub-second electrode 1213, and the second track 1215. The insulating layer 1112b exposes part of the contact pads (1224, 1214, 1229), part of electrodes (1222, 1223, 1212, 1213, 1228), and part of the reaction zones of both electrical circuits deployed on two base layers 1211 and 1221. In an assembled biosensor test strip, the sides bearing the electrical circuits will face each other with the contact pads (1224, 1214, 1229) exposed for electrically connecting to a biosensor monitor (not shown). From a top view of the assembled biosensor strip, the first electrode 1222 will not overlap with the second electrode 1212. The sub-first, the sub-second, the fill-detect electrodes and the check nodes are optional and may be employed or left out if desired.

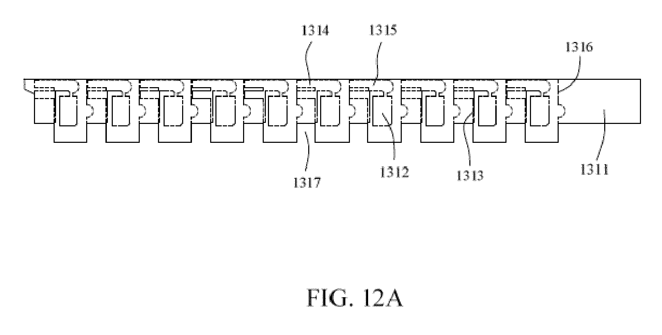

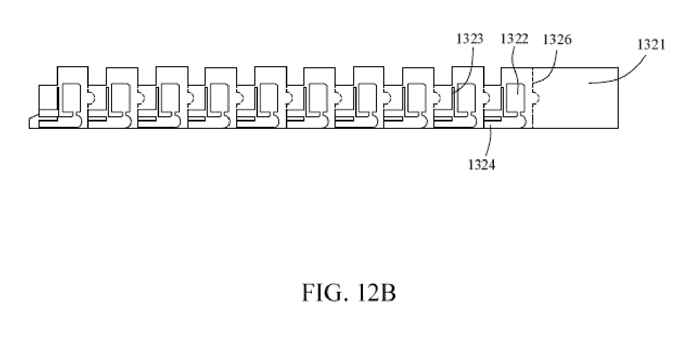

Another embodiment of the present disclosure is shown in FIGS. 12A and 12B. The overall biosensor test strip structure is similar to that described in FIG. 11B. Some differences are described here. A first electrode 1312 and a second electrode 1322 are enlarged and, from the top view of the assembled biosensor test strip, the first electrode 1312 overlaps with the second electrode 1322. Even though a small amount of biological sample reacts with just a small part of the reagent on the reagent zone, both the first electrode 1312 and the second electrode 1322 will be in direct contact with the mixed samples of the reagent and the biological samples. In contrast, the embodiment given in FIG. 11B will have only one electrode (which would be the first electrode 1222) in direct contact with the reacted biological sample when a small amount of biological sample is introduced. A first electrode 1312, a first track 1315, a sub-first electrode 1313, a first contact pad 1314, and pre-cuts 1316 are formed on a first base layer 1311. A first opening area 1317 is formed on the first base layer 1311 and defined by the first base layer 1311. A second electrode 1322, a sub-second electrode 1323 and a second contact pad 1324 are formed on a second base layer 1321. Pre-cuts 1326 are formed on a second base layer 1321 at a position corresponding to the pre-cuts 1316 on a first base layer 1311. In this embodiment, the contact pads (1314, 1324) are substantially parallel to the longitudinal side of the biosensor test strip, while the electrodes (1312, 1313, 1322, 1323) are substantially perpendicular to the longitudinal side of the biosensor test strip.

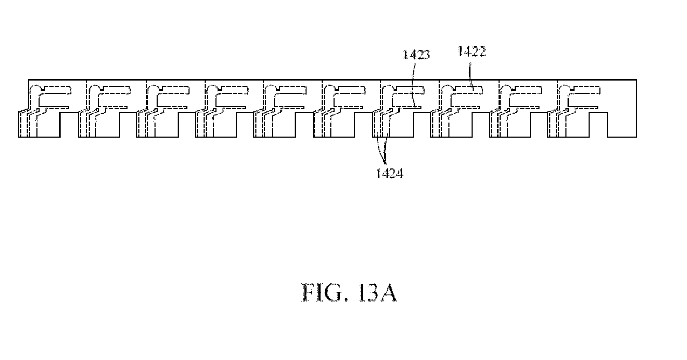

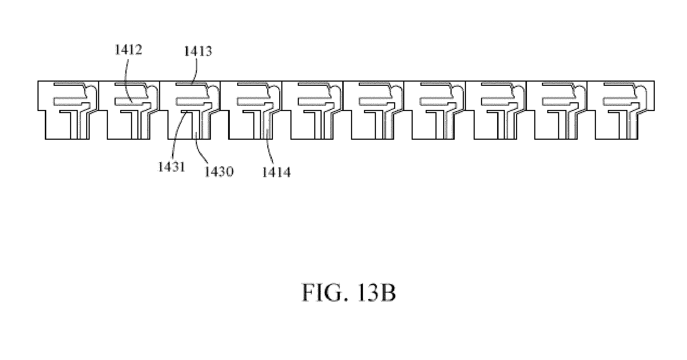

Referring now to FIGS. 13A and 13B, the electrical circuit is similar to what is described in FIG. 2. In this embodiment, a first contact pad 1414, a second contact pads 1424 and a fill-detect contact pad 1430 are substantially perpendicular to the longitudinal side of the biosensor test strip, while a first electrode 1412, a sub-first electrode 1413, a second electrode 1422, a sub-second electrode 1423, and a fill-detect electrode 1431 are substantially parallel to the longitudinal side of the biosensor test strip.

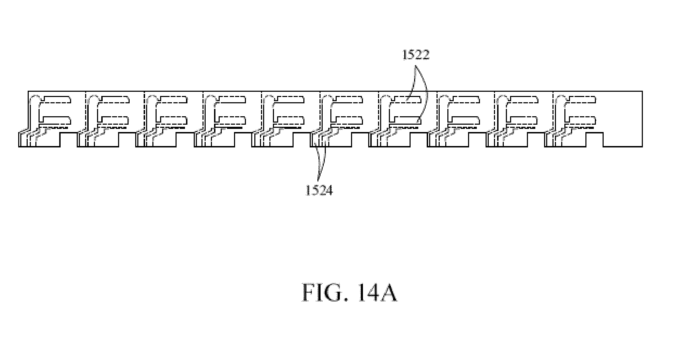

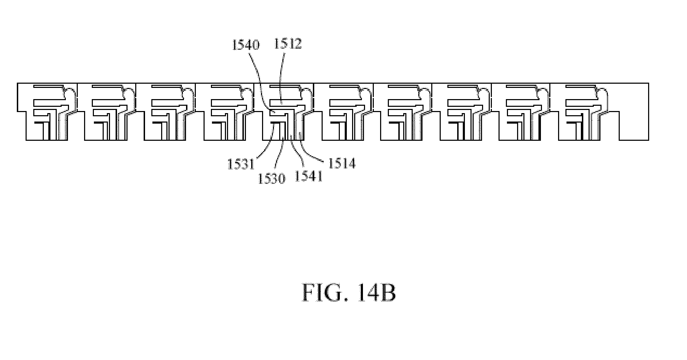

Referring to FIGS. 14A and 14B, the electrical circuit is similar to that described in FIG. 8. In this embodiment, a first contact pad 1514, a second contact pad 1524, a third contact pad 1541, and a fill-detect contact pad 1530 are substantially perpendicular to the longitudinal side of the biosensor test strip, while a first electrode 1512, a second electrode 1522, a third electrode 1540 and a fill-detect electrode 1531 are substantially parallel to the longitudinal side of the biosensor test strip.

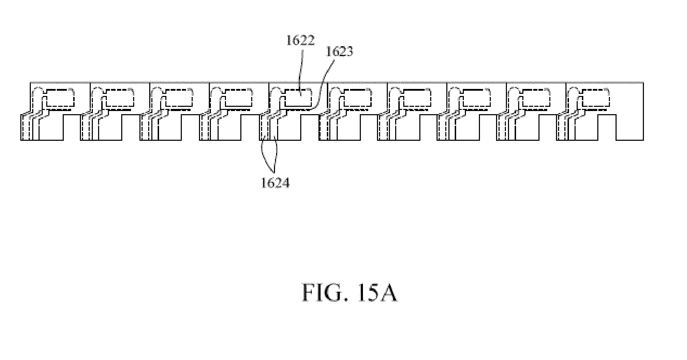

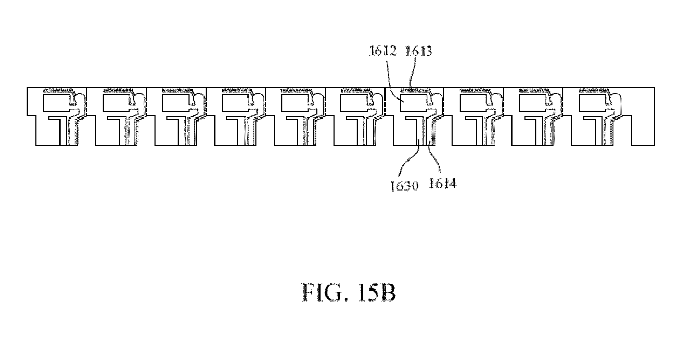

Referring to FIGS. 15A and 15B, the electrical circuit is similar to that described in FIGS. 12A and 12B. In this embodiment, a first electrode 1612 and a second electrode 1622 are enlarged. A first contact pad 1614, a second contact pads 1624 and a fill-detect contact pad 1630 are substantially perpendicular to the longitudinal side of the biosensor test strip, while a first electrode 1612, a sub-first electrode 1613, a second electrode 1622, a sub-second electrode 1623, and a fill-detect electrode 1631 are substantially parallel to the longitudinal side of the biosensor test strip.

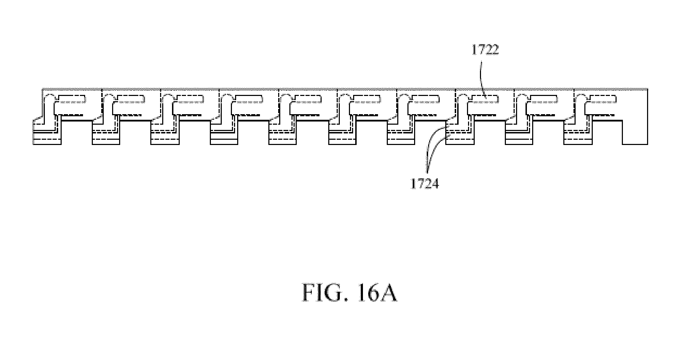

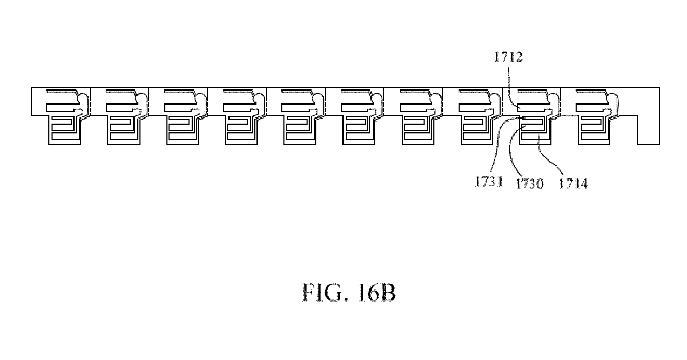

Referring to FIGS. 16A and 16B, the electrical circuit is similar to that described in FIG. 10. In this embodiment, a first electrode 1712, a first contact pad 1714, a fill-detect electrode 1731, a fill-detect contact pad 1730, a second electrode 1722 and a second contact pad 1724 are substantially parallel to the longitudinal side of the biosensor test strip.

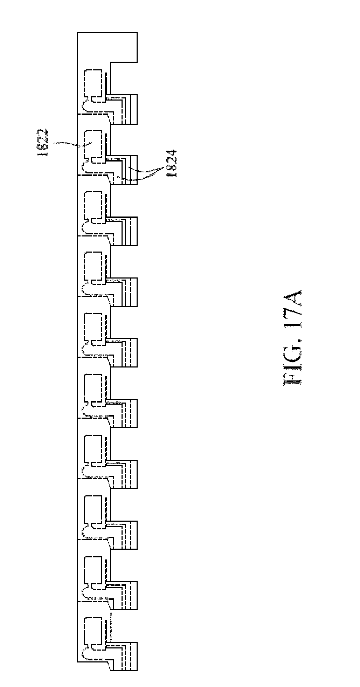

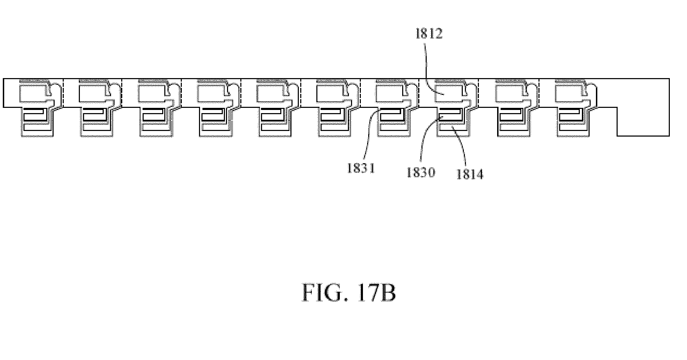

Referring to FIGS. 17A and 17B, the electrical circuit is similar to that described in FIGS. 12A and 12B. In this embodiment, a first electrode 1812 and a second electrode 1822 are enlarged. A first electrode 1812, the first contact pad 1814, a fill-detect electrode 1831, a fill-detect contact pad 1830, a second electrode 1822, and a second contact pad 1824 are substantially parallel to the longitudinal side of the biosensor test strip.

The deployment of the electrodes and the electrode pads described in FIG. 6 to FIG. 17B may be arranged as described in, but not limited to, the embodiments of FIGS. 5A-5L.

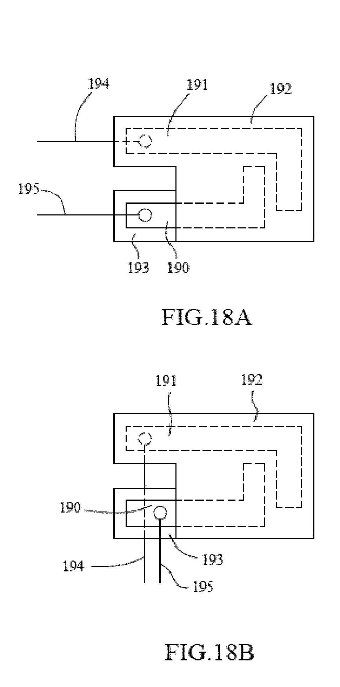

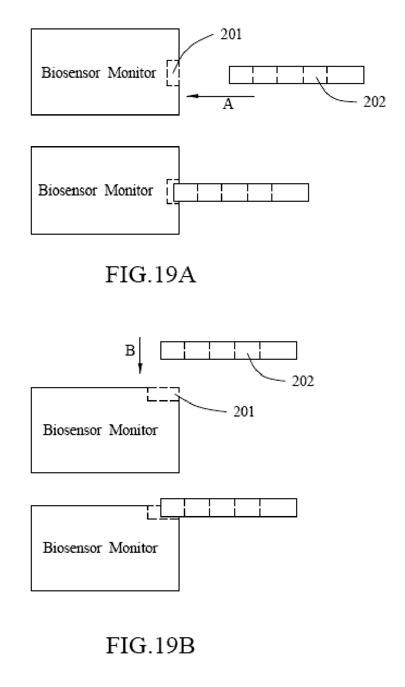

Referring to FIGS. 18A and 18B, a biosensor test device includes the biosensor monitor and the single biosensor test strip, the connection between the biosensor monitor and the single biosensor test strip with multiple tests is illustrated. As indicated, a biosensor test strip comprises two base layers 192 and 193, and at least two contact pads 191 and 190. The contact pad 191 is formed on the base layer 192 while the contact pad 190 is formed on the base layer 193. The contact pad 191 is electrically connected to a biosensor monitor connector terminal 194 and the contact pad 190 is electrically connected to a biosensor monitor connector terminal 195. As indicated in FIG. 19A, the axis of the terminals 194 and 195 are parallel to the contact pads 191 and 190 while in FIG. 19B the axis of the terminals are perpendicular to the contact pads. To further clarify the deployment of the terminals, the terminal 194 contacts the contact pad 191 on one side of the biosensor test strip while terminal 195 contacts the contact pad 190 on the opposite side of the biosensor test strip. FIGS. 18A and 18B describe embodiments that apply to all embodiments given in FIGS. 11-17.

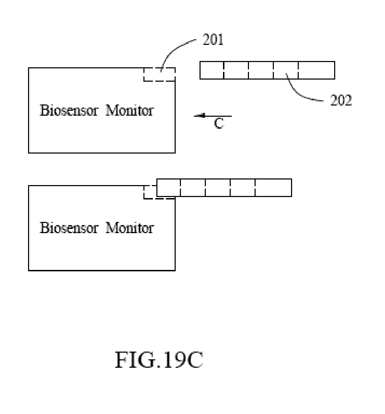

Another aspect of the present disclosure is illustrated in FIGS. 19A, 19B, and 19C. A biosensor test strip 202 with multiple tests can be inserted in to the biosensor monitor in different directions at different places. As indicated in FIG. 19A, a biosensor monitor has a test strip inserting port 201 located on a non-corner area. The biosensor test strip 202 with multiple tests is inserted into the biosensor monitor in a direction A, where the shorter side of the biosensor test strip 202 will contact the biosensor monitor first. Further, the sample introducing port (not annotated) which is either located on the longitudinal side or the shorter side of the biosensor test strip 202, is exposed for a user to introduce biological samples. FIGS. 6, 7, 11B, and 12 could be performed in the way described here where the sample introducing port is located on the short side of the biosensor test strip 202.

Referring to FIG. 19B, a biosensor monitor has a test strip inserting port 201 located on a corner area. The biosensor test strip 202 with multiple tests is inserted into the biosensor monitor in a direction B, where the longitudinal side of the biosensor test strip 202 will contact the biosensor monitor first. Further, the sample introducing port, which is either on the longitudinal side or the short side of the test strip, is exposed for a user to introduce biological samples. FIGS. 8, 9, 13, 14, and 15 could be performed in the way described here.

Referring to FIG. 19C, a biosensor monitor has a test strip inserting port 201 located on a corner area. The biosensor test strip 202 with multiple tests is inserted into the biosensor monitor in a direction C, where the shorter side of the biosensor test strip 202 will contact the biosensor monitor first. Further, the sample introducing port, which is either on the longitudinal side or the short side of the test strip, is exposed for a user to introduce biological samples. FIGS. 10, 16, and 17 could be performed in the way described here where the sample introducing port is located on the longitudinal side of the biosensor test strip 202.

It is to be further understood that even though numerous characteristics and advantages of the present embodiments have been set forth in the foregoing description, together with details of the structures and functions of the embodiments, the disclosure is illustrative only, and changes may be made in details, especially in matters of shape, size, and arrangement of parts within the principles of the disclosure to the full extent indicated by the broad general meaning of the terms in which the appended claims are expressed.

## Claims

1. A biosensor test strip comprising:
a base layer; and
at least one test section, each of the at least one test section comprising a first electrode, a second electrode, a first track, a second track, a first contact pad,
a second contact pad, a reaction zone formed on a base layer, and a sample introducing port corresponding to the reaction zone, the first track being electrically connected to both the first electrode and the first contact pad, the second track being electrically connected to both the second electrode and the second contact pad, the reaction zone being wholly or partially coated with reagents which contact the first electrode and the second electrode, one of the first electrode and the second electrode surrounding at least a part of the other of the first electrode and the second electrode.

2. The biosensor test strip of claim 1, wherein the second electrode comprises at least two electrode pads.

3. The biosensor test strip of claim 2, wherein the first electrode comprises at least two electrode pads.

4. The biosensor test strip of claim 3, wherein the electrode pads of the first electrode are alternate with the electrode pads of the second electrode.

5. The biosensor test strip of claim 2, 3 or 4 wherein one of the at least two electrode pads has an edge closest to a sample introducing port, another of the at least two electrode pads has an edge farthest to the sample introducing port, the two electrode pads and the first electrode are located between the edges of the at least two electrode pads, and the reaction zone is within the edges of the two electrode pads.

6. The biosensor test strip of claim 2, 3, 4 or 5 wherein the test section further comprises a third electrode located between the at least two electrode pads, the reaction zone contacts part of the third electrode.

7. The biosensor test strip of claim 6, wherein the at least two electrode pads are formed in an open circular shape to define an opening allowing the first electrode and the third electrode to be deployed between the two electrode pads.

8. The biosensor test strip of claim 7, wherein the first electrode and the third electrode are also formed in a semicircle shape to correspond to the second electrode.

9. The biosensor test strip of any preceding claim, wherein the test section further comprises a sub-first electrode electrically coupled to the first electrode, the sub-first electrode is located at a position closest to the sample introducing port.

10. The biosensor test strip of claim 9, wherein the test section further comprises a sub-second electrode electrically coupled to the second electrode, the sub-second electrode is located at a position farthest to the sample introducing port.

11. The biosensor test strip of claim 10, wherein the test section further comprises a fill-detect contact pad and a fill-detect electrode extending outwardly from the fill-detect contact pad.

12. The biosensor test strip of claim 11, wherein each of the first track and the second track comprises a check node close to corresponding one of the first electrode and the second electrode.

13. The biosensor test strip of claim 12, wherein the first electrode, the first check node, the sub-first electrode, the first track and the first contact pad are in electrical connection and form a first circuit, the second electrode, the second check node, the sub-second electrode, the second track and the second contact pad are in electrical connection and form a second circuit, the fill-detect electrode and the fill-detect contact pad are in electrical connection and form a fill-detect circuit.

14. The biosensor test strip of claim 12 or 13, wherein the base layer defines at least one pre-cut at a side of the test section.

15. The biosensor test strip of claim 14, wherein parts of the first contact pad and the second contact pad are substantially parallel to a longitudinal side of the base layer, the first electrode, the sub-first electrode, the second electrode, the sub-second electrode and the fill-detect electrode are substantially perpendicular to the longitudinal side of the base layer.

16. The biosensor test strip of claim 14 or 15, wherein the test section further comprises a third electrode, parts of the first contact pad and the second contact pad are substantially parallel to a longitudinal side of the base layer, parts of the first electrode, the sub-first electrode, the second electrode, the sub-second electrode, the third electrode and the fill-detect electrode are substantially perpendicular to the longitudinal side of the base layer.

17. The biosensor test strip of claim 14, 15 or 16 wherein parts of the first contact pad and the second contact pad are substantially perpendicular to a longitudinal side of the base layer, parts of first electrode, the sub-first electrode, the second electrode, the sub-second electrode and the fill-detect electrode are substantially parallel to the longitudinal side of the base layer.

18. The biosensor test strip of claim 14, 16 or 17 wherein the test section further comprises a third electrode, parts of the first contact pad and the second contact pad are substantially perpendicular to a longitudinal side of the base layer, parts of first electrode, the sub-first electrode, the second electrode, the sub-second electrode, the third electrode and the fill-detect electrode are substantially parallel to the longitudinal side of the base layer.

19. The biosensor test strip of claim 14, 15, 16, 17 or 18, wherein the first contact pad, the second contact pad, the first electrode, the sub-first electrode, the second electrode, the sub-second electrode and the fill-detect electrode are all substantially parallel to the longitudinal side of the base layer.

20. The biosensor test strip of claim 14, 15, 16, 17, 18 or 19, wherein the test section further comprises a third electrode, the first contact pad, the second contact pad, the first electrode, the sub-first electrode, the second electrode, the sub-second electrode, the third electrode and the fill-detect electrode are all substantially parallel to the longitudinal side of the base layer.

21. The biosensor test strip of any of claims 12 to 20, further comprising an insulating layer, an adhesive layer and a cover layer, wherein the insulating layer is formed on the base layer and exposes parts of the first contact pad, the second contact pad, the first electrode, the sub-first electrode, the second electrode, the sub-second electrode, the reaction zone and the check nodes.

22. The biosensor test strip of claim 21, wherein the insulating layer comprises a slot, a reaction zone opening and a venting slot, and the reaction zone opening is in communication with the venting slot.

23. The biosensor test strip of claim 21 or 22, wherein the adhesive layer is formed on the insulating layer and exposes parts of the first contact pad, the second contact pad, the first electrode, the sub-first electrode, the second electrode, the sub-second electrode, the reaction zone and the check nodes.

24. The biosensor test strip of claim 21, 22 or 23, wherein the cover layer is formed on the insulating layer and exposes parts of the first contact pad and the second contact pad.

25. The biosensor test strip of any of claims 12 to 24, further comprising an insulating layer and an adhesive layer, wherein the base layer comprises a first base layer and a second base layer, the first base layer has the first electrode, the first track, the sub-first electrode, the first contact pad, the fill-detect electrode and the fill-detect contact pad formed thereon, and the second base layer has the second electrode, the second track, the sub-second electrode, the second contact pad, the fill-detect electrode and the fill-detect contact pad formed thereon.

26. The biosensor test strip of claim 25, wherein the first base layer defines a first opening area exposing the second contact pad, and the second layer defines a second opening area exposing the first contact pad.

27. The biosensor test strip of claim 26, wherein the insulating layer and the adhesive layer are located between the first base layer and the second base layer, the adhesive layer directly contacts one of the first base layer and the second base layer, the insulating layer exposes the first electrode, the sub-first electrode, the first contact pad, the second electrode, the sub-second electrode, the second contact pad, the fill-detect electrode, the fill-detect contact pad and the reaction zone on the first base layer and the second base layer, the adhesive layer is formed on the insulating layer and exposes the first electrode, the sub-first electrode, the first contact pad, the second electrode, the sub-second electrode and the second contact pad, the fill-detect electrode, the fill-detect contact pad and the reaction zone on the first base layer and the second base layer.

28. The biosensor test strip of claim 27, wherein the first electrode is not overlapped with the second electrode.

29. The biosensor test strip of claim 27, wherein the first electrode is overlapped with the second electrode.

30. The biosensor test strip of claim 1, further comprising a third electrode, a third track, and a third contact pad, the reaction zone being wholly or partially coated with reagents which contact the first electrode, the second electrode and the third electrode.

31. The biosensor test strip of claim 30, wherein the third electrode is substantially surrounded by the first electrode and the second electrode.

32. The biosensor test strip of claim 30 or 31, wherein the test section further comprises a sub-first electrode electrically coupled to the first electrode and a sub-second electrode electrically coupled to the second electrode, the sub-first electrode is located at a position closest to the sample introducing port, and the sub-second electrode is located at a position farthest to the sample introducing port.

33. The biosensor test strip of claim 32, wherein the test section further comprises a fill-detect contact pad and a fill-detect electrode contacting the reaction zone.

34. The biosensor test strip of claim 33, wherein each of the first track and the second track comprises a check node close to corresponding one of the first electrode and the second electrode.

35. A biosensor test device comprising:
a biosensor monitor comprising two connector terminals; and
a biosensor test strip connecting with the biosensor monitor, the a biosensor test strip comprising a base layer having two contact pads connecting with the two connector terminal of the biosensor monitor, respectively;
wherein the biosensor test strip comprises a base layer and at least one test section, each of the at least one test section comprises a first electrode, a second electrode, a first track, a second track, a first contact pad, a second contact pad, a reaction zone formed on a base layer, and a sample introducing port corresponding to the reaction zone, the first track is electrically connected to both the first electrode and the first contact pad, the second track is electrically connected to both the second electrode and the second contact pad, the reaction zone is wholly or partially coated with reagents which contact the first electrode and the second electrode, one of the first electrode and the second electrode surrounds at least a part of the other of the first electrode and the second electrode.

36. The biosensor test device of claim 35, wherein the connector terminals have axes thereof parallel to the contact pads.

37. The biosensor test device of claim 35 or 36, wherein the connector terminals have axes thereof perpendicular to the contact pads.

38. The biosensor test device of claim 35, 36 or 37, wherein the biosensor monitor further comprises a test strip inserting port via which the biosensor test strip is inserted in to the biosensor monitor.
